# EUROPEAN PATENT SPECIFICATION

(11) **EP 1 967 549 B1**
(45) Date of publication and mention of the grant of the patent: **29.02.2012**
(21) Application number: 06843184.0
(22) Date of filing: 25.12.2006
(51) Int. Cl.: C08L 67/02, B29C 65/16, C08K 5/00, C08K 5/5313, C08K 13/02, B29K 67/00

(54) **USE OF A FLAME-RETARDANT RESIN COMPOSITION FOR TRANSMISSION SIDE MEMBER IN LASER WELDING**
VERWENDUNG EINER FLAMMHEMMENDEN HARZZUSAMMENSETZUNG ALS ÜBERTRAGUNGSSEITENTEIL BEIM LASERSCHWEISSEN
UTILISATION D'UNE COMPOSITION DE RESINE IGNIFUGE POUR ELEMENT SECONDAIRE DE TRANSMISSION DANS UN SOUDAGE AU LASER

(30) Priority: 26.12.2005 JP 2005373194
(43) Date of publication of application: 10.09.2008
(73) Proprietor: Wintech Polymer Ltd., Tokyo 108-8280 (JP)
(72) Inventor: HARUHARA, Jun, Fuji-shi, Shizuoka 4168533 (JP); HIRAKAWA, Takakazu, Fuji-shi, Shizuoka 4168533 (JP); HANABUSA, Kazuhito, Fuji-shi, Shizuoka 4168533 (JP)
(74) Representative: von Kreisler Selting Werner
(86) International application number: PCT/JP2006/325781
(87) International publication number: WO 2007/077794

(56) References cited:
- EP-A2- 0 699 708
- WO-A1-2005/035657
- DE-A1- 10 330 722
- JP-A- 08 073 720
- JP-A- 2000 219 772
- JP-A- 2000 508 365
- JP-A- 2005 187 798

## Description

### TECHNICAL FIELD

The present invention relates the use of a resin composition for forming a laser-transmittable member in a laser welding. The composition has a high laser transmissivity (or laser light transmissivity) and an excellent flame retardancy. The present invention further relates to a laser-weldable molded product (or a molded product for a laser welding) comprising the resin composition which is useful for a laser-transmittable member (or a laser-transmitting member) in a laser welding.

### BACKGROUND ART

A polyester-series resin, for example, a polybutylene terephthalate (PBT) -series resin, has various excellent properties such as heat resistance, chemical resistance, electric properties, mechanical properties, and shaping processability (or moldability) and is used for a number of applications. Specific examples of the applications include a variety of automotive electrical components or parts (e.g. , various control units, various sensors, and ignition coils), and connectors, switch parts, relay parts, coil parts, trans parts, and lamp parts installed in automobiles or electric appliances. These parts often comprise a conductive part and have an increased risk of ignition caused by a trouble such as abnormal overheat or short circuit recently. Therefore, the improvement in flame retardancy of these parts has been required.

The improvement in flame retardancy of a PBT-series resin has long been investigated. For example, Japanese Patent Application Laid-Open No. 230348/1993 (JP-A-5-230348, Patent Document 1) discloses a flame-retardant resin composition which comprises a PBT-series resin, a flame-retardant auxiliary containing a brominated epoxy-series flame retardant, antimony trioxide, and/or antimony pentoxide as main components, and a polytetrafluoroethylene resin obtained by emulsion polymerization. Moreover, Japanese Patent Application Laid-Open No. 256545/2000 (JP-A-2000-256545, Patent Document 2) discloses a flame-retardant polyester resin composition comprising a specific aromatic polyester, a brominated epoxy compound, a brominated polyacrylate, and antimony trioxide. Recently, from environmental concerns over a halogen-containing flame retardant such as a bromine-containing flame retardant (e.g., disadvantages due to wastes), use of a halogen-free flame retardant has been also proposed. For example, Japanese Patent Application Laid-Open No. 70671/1993 (JP-A-5-70671, Patent Document 3) discloses a flame-retardant resin composition comprising a polyalkylene terephthalate having a specific intrinsic viscosity, a reinforcing filler, a melamine-cyanuric acid adduct,and a phosphorus-containing flame retardant having a specific structure.

On the other hand, the above-mentioned parts are often formedfromaplurality of members (or parts) by bonding, or the parts are often bonded to other parts. For bonding these parts or components, an adhesive, a screw cramp, a snap fit, and various welding methods (e.g., a hot plate welding, an ultrasonic welding, a vibration welding, and a laser welding) are utilized. However, in the use of an adhesive, the loss of time for curing of the adhesive, or the burden on the environment becomes a problem. Moreover, in a means using a screw cramp, the labor or the cost required for fastening increases. In a hot plate welding, an ultrasonic welding, and a vibration molding among welding methods, there is a possible damage to a product due to heat, vibration, and others. On the other hand, a bonding (or joining) method by laser welding has no damage to a product due to heat or vibration involved in the welding, and the welding process is also very simple. Thus, recently the laser welding method has been widely utilized, and has attracted the attention as a welding manner for various resin components or parts.

However, bonding of a PBT-series resin with a laser welding has difficulty welding the resin due to a low transmittance to a laser beam. Accordingly, various approaches have been considered. For example, Japanese Patent Application Laid-Open No. 136601/2003 (JP-A-2003-136601, Patent Document 4) discloses a plastic component having a suitable transmissivity for a laser welding application. This document mentions that the plastic component comprises a composition containing a polyester and has a transmittance of not less than 10% at a wavelength of 800 to 1200 nm in terms of a thickness of 1 mm in a molded product comprising the composition. Japanese Patent Application Laid-Open No. 26656/2001 (JP-A-2001-26656, Patent Document 5) discloses a process for a molded article, which comprises uniting (A) a molded product comprising (a) at least one polyester-series copolymer selected from the group consisting of a PBT-series copolymer having a melting point of 170 to 220°C, a polyethylene terephthalate-series copolymer having a melting point of 200 to 250°C, and a polyethylene naphthalate-series copolymer having a melting point of 210 to 260°C to (B) a molded product other than the molded product (A) by welding to give a molded article. Moreover, the Patent Document 5 mentions that a flame retardant or flame-retardant auxiliary (such as a halide or a phosphorus compound) can be added in the range that the effects of the invention are not deteriorated.
DE-A-10330722 discloses a process for laser-welding a first resin molded product which is fully laser-transmittable and a second resin molded product which is laser-absorbable, said method comprising the steps of bringing the first resin molded product into contact with the second molded product and irradiating a laser beam in a direction from the first resin molded product toward the second molded product. The first resin molded product is obtained from a resin composition comprising a polyester and, optionally, calcium phenyl phosphinate.

However, even in a laser welding of a conventional flame-retardant polyester-series resin composition, the poor laser transmissivity prevents a successful laser welding. Moreover, although a resin composition to which a flame retardant and a flame-retardant auxiliary are added in the range that the laser-weldability (laser transmissivity) is not deteriorated and can be subjected to welding, such a composition has practically insufficient flame retardancy. Thus it is difficult to realize both of laser-weldability and flame retardancy at high levels by the conventional manner.
[Patent Document 1] JP-A-5-230348 (Claim 1)
[Patent Document 2] JP-A-2000-256545 (Claim 1)
[Patent Document 3] JP-A-5-70671 (Claim 1)
[Patent Document 4] JP-A-2003-136601 (Claim 2)
[Patent Document 5] JP-A-2001-26656 (Claim 1 and paragraph number [0027])

### DISCLOSURE OF THE INVENTION

### PROBLEMS TO BE SOLVED BY THE INVENTION

It is therefore an object of the present invention to provide a flame-retardant resin composition for a laser-transmittable member (or laser-transmitting member), which realizes both of laser-weldability (laser transmissivity) and flame retardancy at high levels, and a molded product thereof (or a laser-transmittable member (or laser-transmitting member)).

It is another object of the present invention to provide a flame-retardant resin composition for a laser-transmittable member, which has an excellent laser transmissivity and can maintain a high flame retardancy in a thin-walledmolded product, and a molded product thereof (or a laser-transmittable member or a member located or disposed in a laser-transmitting side).

It is still another object of the present invention to provide a composite molded product in which a molded product having a high flame retardancy is bonded to a laser-absorbable resin molded product by laser welding.

It is a further object of the present invention to provide a laser welding process in which a molded product and a laser-absorbable resin molded product are bonded together with a high weld strength.

### MEANS TO SOLVE THE PROBLEMS

The inventors of the present invention made intensive studies to achieve the above objects and finally found that a combination use of a polyester-series resin and a salt of a phosphinic acid compound realizes both of laser-weldability and flame retardancy at high levels without deterioration of laser transmissivity. The present invention was accomplished based on the above findings.
In particular the present invention provides the following:
1. Use of a flame-retardant resin composition for forming a laser-transmittable member in a laser welding, which comprises
   (A) a polyester-series resin and
   (B) at least one phosphinic acid compound selected from the group consisting of a metal salt of a dialkyl phosphinic acid and a metal salt of an alkanebisphosphinic acid,
   wherein the proportion of the phosphinic acid compound (B) is 10 to 50 parts by weight relative to 100 parts by weight of the polyester-series resin (A).
2. The use according to item 1, wherein the polyester-series resin (A) comprises a polybutylene terephthalate-series resin.
3. The use according to item 1, wherein, regarding the phosphinic acid compound (B), the metal salt of the dialkyl phosphinic acid is represented by the following formula (1) and the metal salt of the alkanebisphosphinic acid is represented by the following formula (2): 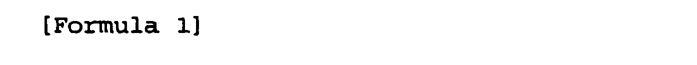 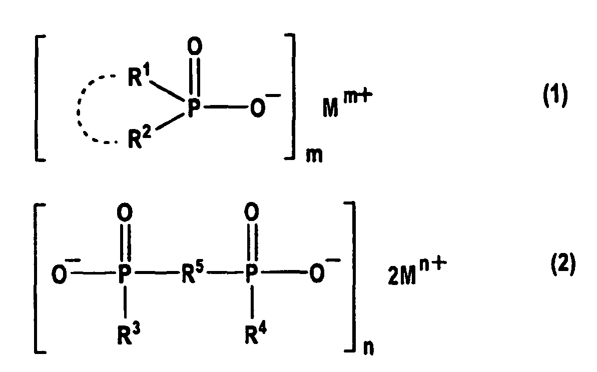 wherein R¹, R², R³, and R⁴ are the same or different and each represents an alkyl group, R⁵ represents an alkylene group, M^{m+} represents a metal having m-valences, and "m" denotes an integer of 2 to 4; Mⁿ⁺ represents a metal having n-valences, and "n" denotes an integer of 2 to 4.
4. The use according to item 1, wherein the resin composition has a laser light transmittance of not less than 15% for a molded product comprising the resin composition and having a thickness of 2 mm.
5. The use according to item 1, wherein the resin composition further comprises (C) a fluorine-containing resin in a proportion of 0.01 to 1 part by weight relative to 100 parts by weight of the polyester-series resin (A) .
6. The use according to item 1, wherein the resin further comprises (D) a nitrogen-containing flame retardant in a proportion of 0.5 to 10 parts by weight relative to 100 parts by weight of the polyester-series resin (A).
7. The use according to item 6, wherein the nitrogen-containing flame retardant (D) comprises a salt of a triazine compound with at least one member selected from the group consisting of cyanuric acid and isocyanuric acid.
8. The use according to item 1, wherein the resin composition further comprises (E) a glassy filler in a proportion of 5 to 70 parts by weight relative to 100 parts by weight of the polyester-series resin (A).
9. A composite molded product comprising
   a first resin molded product comprising (A) a polyester-series resin and (B) at least one phosphinic acid compound selected from the group of a metal salt of a dialkyl phosphinic acid and a metal salt of an alkane bisphosphinic acid,
   wherein the proportion of the phosphinic acid compound (B) is 10 to 50 parts by weight relative to 100 parts by weight of the polyester-series resin (A) and
   a second resin molded product which is laser-absorbable and is bonded to the first resin molded product by laser welding.
10. A composite molded product according to item 9, wherein the first resin molded product has an area having a thickness of 0.1 to 2 mm, and the second resin molded product is bonded to the area of the first resin molded product.
11. A process for laser-welding a first resin molded product and a second resin molded product which is laser-absorbable,
   which comprises bringing the first resin molded product into contact with the second resin molded product and irradiating a laser beam in a direction from the first res in molded product toward the second resin molded product, wherein the first resin molded product comprises a flame-retardant resin composition comprising (A) a polyester-series resin and (B) at least one phosphinic acid compound selected from the group consisting of a metal salt of a dialkyl phosphinic acid, a metal salt of an alkanebisphosphinic acid, wherein the proportion of the phosphinic acid compound (B) is 10 to 50 parts by weight relative to 100 parts by weight of the polyester-series resin (A) and the first resin molded product has a laser light transmittance of not less than 15% at a thickness of 2 mm.
12. A process according to item 11, wherein the first resin molded product may be colored with a non-laser-absorbable coloring agent, the second resin molded product comprises a thermoplastic resin composition containing a laser absorbent or a coloring agent, a surface of the first resin molded product and a surface of the second molded product are brought into contact with each other, and the both resin molded products are bonded by a laser beam irradiation.
13. A process according to item 11, wherein the first resin molded product has a laser-transmitting area having a thickness of 0.1 to 2 mm and a laser light transmittance of not less than 15%, a surface of the second resin molded product is brought into contact with at least the laser-transmitting area of the first resin molded product, and the laser irradiation is conducted for bonding the molded products.
14. A process according to item 11, wherein the first resin molded product comprises a resin composition containing the following components (A) and (B), or components (A), (B) and (C):
   (A) a polybutylene terephthalate-series resin,
   (B) at least one phosphinic acid compound selected from the group consisting of a metal salt of a dialkyl phosphinic acid represented by the following formula (1) and a metal salt of an alkanebisphosphinic acid represented by the following formula (2): 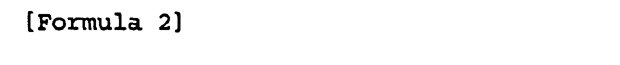 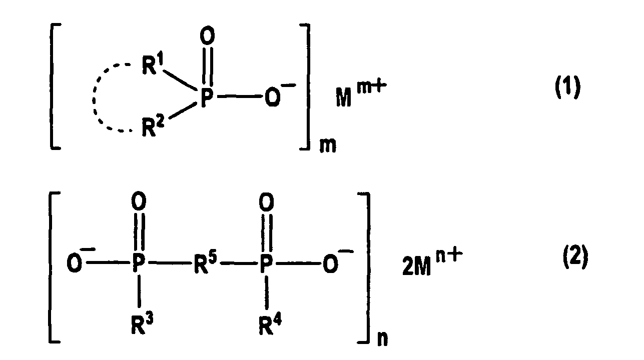 wherein R¹, R², R³, and R⁴ are the same or different and each represents an alkyl group, R⁵ represents an alkylene group, M^{m+} represents a metal having m-valences, and "m" denotes an integer of 2 to 4; Mⁿ⁺ represents a metal having n-valences, and "n" denotes an integer of 2 to 4,
   (C) a fluorine-containing resin,
wherein the proportion of the phosphinic acid compound (B) is 10 to 50 parts by weight relative to 100 parts by weight of the polyester-series resin (A).

### EFFECTS OF THE INVENTION

According to the present invention, the use of the combination of a polyester-series resin (for example, a polybutylene terephthalate-series resin) and a specific phosphinic acid compound realizes both of laser-weldability and flame retardancy at high levels while maintaining excellent properties of the polyester-series resin (for example, mechanical properties, heat resistance, and chemical resistance) without deterioration of laser transmissivity. Moreover, such a composition has an excellent laser transmissivity and can maintain a high flame retardancy even in a thin-walled molded product. Therefore, a resin molded product having a high flame retardancy can easily be bonded to a laser-absorbable resin molded product by laser welding. Further, according to the laser welding process of the present invention, the resin molded product can be bonded to the laser-absorbable resin molded product with a high weld strength.

### BRIEF DESCRIPTION OF THE DRAWINGS

[Fig. 1] Fig. 1 is a schematic side elevational view for illustrating a laser welding in an embodiment of Examples and Comparative Examples.
[Fig. 2] Fig. 2 is a plan view for illustrating a laser welding in an embodiment of Examples and Comparative Examples.

### DETAILED DESCRIPTION OF THE INVENTION

[Flame-retardant resin composition for laser welding (or for a laser-transmittable member)]

### (A) Polyester-series resin

A polyester-series resin as a base resin comprises a homopolyester or copolyester obtainable from a polycondensation of a dicarboxylic acid component and a diol component, a polycondensation of a hydroxycarboxylic acid or a lactone, a polycondensation of these components, or the like. The preferred polyester-series resin usually includes a saturated polyester-series resin, particularly, an aromatic saturated polyester-series resin, and practically includes a polyalkylene arylate-series resin (such as a polyalkylene arylate or a polyalkylene arylate-series copolymer) such as a polybutylene terephthalate (PBT)-series resin (such as a polybutylene terephthalate or a polybutylene terephthalate-series copolymer), a polybutylene naphthalate (PBN)-series resin (such as a PBN or a PBN-series copolymer), a polyethylene terephthalate (PET)-series resin (such as a PET or a PET-series copolymer), a polyethylene naphthalate (PEN) -series resin (such as a PEN or a PEN-series copolymer) The polyester-series resins may be used singly or in combination. In the polyester-series resins, a low-crystalline or amorphous aromatic polyester-series resin is preferred due to a high laser-weldability.

Incidentally, the dicarboxylic acid may include, for example, an aliphatic dicarboxylic acid (e.g., a C₄₋₄₀ aliphatic dicarboxylic acid such as succinic acid, glutaric acid, adipic acid, pimelic acid, suberic acid, azelaic acid, sebacic acid, undecanedicarboxylic acid, dodecanedicarboxylic acid, hexadecanedicarboxylic acid, or dimeric acid, preferably a C₄₋₁₄dicarboxylic acid), an alicyclic dicarboxylic acid (e.g., a C₈₋₁₂ alicyclic dicarboxylic acid such as hexahydrophthalic acid, hexahydroisophthalic acid, hexahydroterephthalic acid, or himic acid), an aromatic dicarboxylic acid other than terephthalic acid (e.g., a C₈₋₁₆ aromatic dicarboxylic acid such as phthalic acid, isophthalic acid; a naphthalenedicarboxylic acid such as 2,6-naphthalenedicarboxylic acid; and 4,4'-diphenyldicarboxylic acid, 4,4'-diphenoxyetherdicarboxylic acid, 4,4'-diphenyletherdicarboxylic acid, 4,4'-diphenylmethanedicarboxylic acid, or 4,4'-diphenylketonedicarboxylic acid), or a reactive derivative thereof [for example, a derivative capable of forming an ester (or an ester-formable derivative), e.g., a lower alkyl ester (e.g., a C₁₋₄alkyl ester of phthalic acid or isophthalic acid, such as dimethyl phthalate or dimethyl isophthalate (DMI)); an acid chloride; and an acid anhydride]. In addition, if necessary, a polycarboxylic acid (such as trimellitic acid or pyromellitic acid) may be used in combination with the dicarboxylic acid.

The diol may include, for example, an aliphatic alkanediol other than 1,4-butanediol (for example, a C₂₋₁₂alkanediol such as ethylene glycol, trimethylene glycol, propylene glycol, neopentyl glycol, hexanediol, octanediol, or decanediol, preferably a C₂₋₁₀alkanediol), a polyalkylene glycol [for example, a glycol having a plurality of oxyC₂₋₄alkylene units, e.g., diethylene glycol, dipropylene glycol, ditetramethylene glycol, triethylene glycol, tripropylene glycol, and a polytetramethylene glycol], an alicyclic diol (e.g., 1,4-cyclohexanediol, 1,4-cyclohexanedimethanol, and a hydrogenated bisphenol A), an aromatic diol [for example, a C₆₋₁₄aromatic diol such as hydroquinone, resorcinol, or naphthalenediol; a biphenol; a bisphenol compound; and xylylene glycol]. Further, if necessary, a polyol (such as glycerin, trimethylolpropane, trimethylolethane, or pentaerythritol) may be used in combination with the diol.

The bisphenol compound may include a bis(hydroxyaryl)C₁₋₆alkane such as bis(4-hydroxyphenyl)methane (bisphenol F), 1,1-bis(4-hydroxyphenyl)ethane (bisphenol AD), 1,1-bis(4-hydroxyphenyl)propane, 2,2-bis(4-hydroxyphenyl)propane (bisphenol A), 2,2-bis(4-hydroxy-3-methylphenyl)propane, 2,2-bis(4-hydroxyphenyl)butane, 2,2-bis(4-hydroxyphenyl)-3-methylbutane, 2,2-bis(4-hydroxyphenyl)hexane, or 2,2-bis(4-hydroxyphenyl)-4-methylpentane; a bis(hydroxyaryl)C₄₋₁₀cycloalkane such as 1,1-bis(4-hydroxyphenyl)cyclopentane or 1,1-bis(4-hydroxyphenyl)cyclohexane; bis(4-hydroxyphenyl) ether; 4,4'-dihydroxydiphenyl sulfone; 4,4'-dihydroxydiphenyl sulfide; 4,4' -dihydroxydiphenyl ketone; and an alkylene oxide adduct thereof. The alkylene oxide adduct may include a C₂₋₃alkylene oxide adduct of a bisphenol compound (for example, bisphenol A, bisphenol AD, and bisphenol F), e.g., 2,2-bis-[4-(2-hydroxyethoxy)phenyl]propane, diethoxylated bisphenol A (EBPA), 2,2-bis-[4-(2-hydroxypropoxy)phenyl]propane, and dipropoxylated bisphenol A. In the alkylene oxide adduct, the mole number of the added alkylene oxide (a C₂₋₃alkylene oxide such as ethylene oxide or propylene oxide) may be 1 to 10 mol and preferably 1 to 5 mol, relative to each hydroxyl group.

The hydroxycarboxylic acid may include, for example, a hydroxycarboxylic acid such as hydroxybenzoic acid, hydroxynaphthoic acid, hydroxyphenylacetic acid, glycolic acid, or hydroxycaproic acid, or a derivative thereof, and others. The lactone may include a C₃₋₁₂lactone such as propiolactone, butyrolactone, valerolactone, or caprolactone (e.g., ε-caprolactone), and others.

In the above-mentioned preferred polyester-series resins, the copolymerizable monomer used in the polyalkylene arylate-series copolymer may include a diol [for example, a C₂₋₆alkylene glycol (e.g., a straight chain or branched chain alkylene glycol such as ethylene glycol, trimethylene glycol, propylene glycol, or hexanediol), a polyoxyC₂₋₄alkylene glycol having a repeating oxyalkylene unit of about 2 to 4 (e.g., diethylene glycol), and a bisphenol compound (e.g., a bisphenol compound or an alkylene oxide adduct thereof)], a dicarboxylic acid [for example, a C₆₋₁₂aliphatic dicarboxylic acid (e.g., adipic acid, pimelic acid, suberic acid, azelaic acid, and sebacic acid), an asymmetrical aromatic dicarboxylic acid having two carboxyl groups at asymmetric positions of an arene ring thereof, and 1,4-cyclohexanedimethanol], and others. In these compounds, the preferred one includes an aromatic compound, for example, an alkylene oxide adduct of a bisphenol compound (particularly, bisphenol A), and an asymmetrical aromatic dicarboxylic acid [for example, phthalic acid, isophthalic acid, and a reactive derivative thereof (e.g., a lower alkyl ester such as dimethyl isophthalate (DMI))], and others.

The proportion of the copolymerizable monomer relative to the polyester-series resin (or the total amount of the monomers) (the degree of modification in the polyester-series resin) may be selected in the range of not more than 30 mol% (0 to 30 mol%), for example, 0.01 to 30 mol%, and is usually 1 to 30 mol%, preferably 3 to 25 mol%, and more preferably 5 to 20 mol% (e.g., 5 to 15 mol%).

The particularly preferred polyester-series resin includes a PBT-series resin. The PBT-series resins may be used singly or in combination. In particular, the combination of a PBT and a PBT-series copolymer (a modified PBT) is preferred. Moreover, in order to improve flame retardancy, a PBT-series resin and a PET-series resin (e.g. , a PET, a modified PET (a PET-series copolymer)) may be used in combination.

The melting point of the PBT-series resin is, due to a high laser-weldability, not lower than 190°C (e.g., 190 to 270°C), preferably 200 to 260°C, and more preferably 210 to 250°C.

Moreover, the intrinsic viscosity (IV) of the PBT-series resin may be selected from the range of 0.5 to 1.3 dl/g. In order to improve moldability and/or mechanical properties, the intrinsic viscosity may preferably be 0.6 to 1.2 dl/g and more preferably 0.65 to 1.1 dl/g. Incidentally, an excessively low intrinsic viscosity of the PBT-series resin may deteriorate the mechanical strength. On the other hand, an excessively high intrinsic viscosity of the PBT-series resin may deteriorate the flowability, and the moldability.

The polyester-series resin may be produced by a conventional manner, for example, transesterification and direct esterification. For example, the PBT-series resin may be produced by copolymerizing terephthalic acid or a reactive derivative thereof and 1,4-butanediol and if necessary, a copolymerizable monomer, by the above-mentioned conventional manner.

### (B) Phosphinic acid compound

The phosphinic acid compound includes a metal salt of a dialkyl phosphinic acid, and metal salt of an alkane bisphosphinic acid. The phosphinic acid compounds may be used singly or in combination. Incidentally, the phosphinic acid compound may have either a chain structure or a cyclic structure.

The metal salt may contain such phosphinic acids singly or in combination.

The metal that forms a salt may include an alkali metal (e.g., potassium and sodium), an alkaline earth metal (e.g., magnesium and calcium), a transition metal (e.g., iron, cobalt, nickel, and copper), a metal of the group 12 of the Periodic Table of Elements (e.g., zinc), a metal of the group 13 of the Periodic Table of Elements (e.g., aluminum), and others. The metal salts may contain one of these metals or not more than two thereof. In the above-mentioned metals, an alkaline earth metal (e.g., calcium) and a metal of the group 13 of the Periodic Table of Elements (e.g., aluminum) are preferred.

The valence of the metal is not particularly limited to a specific one. The valence may be 1 to 4, preferably 2 to 4, and more preferably 2 or 3.

Concrete examples of the dialkyl phosphinic acid metal salt include a compound represented by the following formula (1). Concrete examples of the alkane bisphosphinic acid metal salt include a compound represented by the following formula (2).

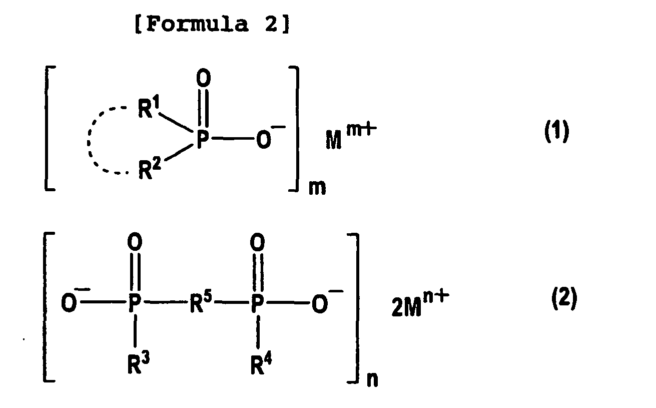

The groups R¹ and R² may bond together to form a ring with an adjacent phosphorus atom. The group M^{m+} represents the above-mentioned metal having m-valences, and "m" denotes an integer of 2 to 4. The group Mⁿ⁺ represents the above-mentioned metal having n-valences, and "n" denotes an integer of 2 to 4. R¹ R², R³, and R⁴, are the same or different and each represent an alkyl group (e.g., a straight chain or branched chain C₁₋₆alkyl group such as methyl, ethyl, isopropyl, n-butyl, or t-butyl group). In these groups, the preferred one usually includes e.g., preferably a C₁₋₄alkyl group.

The ring, which is formed by bonding the groups R¹ and R² together with an adjacent phosphorus atom, is a heterocycle (or a heterocyclic ring) having the phosphorus atom as a hetero atom constituting the ring (that is, a phosphorus atom-containing heterocycle). The ring may usually include a 4- to 20-membered heterocycle and preferably a 5- to 16-membered heterocycle. Moreover, the phosphorus atom-containing heterocycle may be a bicyclo ring. The phosphorus atom-containing heterocycle may have a substituent.

The bivalent hydrocarbon group represented by the group R⁵ is an alkylene group (or an alkylidene group, e.g., a straight chain or branched chain C₁₋₁₀alkylene group that may have a substituent (e.g. , a C₆₋₁₀aryl group), such as methylene, ethylene, phenylethylene, propylene, trimethylene, 1,4-butanediyl, or 1,3-butanediyl group). In these bivalent hydrocarbon groups, the preferred an alkylene group includes e.g., particularly a C₁₋₆alkylene group.

The preferred metal salts (1) and (2) include a polyvalent metal salts having the valences ("m" and "n") of 2 to 3 , respectively. Concrete examples of the phosphinic acid metal salt (1) include a calcium dialkylphosphinate such as calcium dimethylphosphinate, calcium methylethylphosphinate, or calcium diethylphosphinate (e.g., a calcium diC₁₋₁₀alkylphosphinate); a calcium arylphosphinate such as calcium phenylphosphinate or calcium diphenylphosphinate (e.g., a calcium mono- or diC₆₋₁₀arylphosphinate); a calcium alkylarylphosphinate such as calcium methylphenylphosphinate (e.g., a calcium C₁₋₄alkyl-C₆₋₁₀aryl-phosphinate); a calcium salt of an alkylenephosphinic acid that may have a substituent, such as a calcium salt of 1-hydroxy-1H-phosphorane-1-oxide or a calcium salt of 2-carboxy-1-hydroxy-1H-phosphorane-1-oxide (e.g., a calcium C₃₋₆alkylenephosphinate); an aluminum salt corresponding to such a calcium salt; other metal salts; and others.

Concrete examples of the alkane bisphosphinic acid metal salt (2) include a calcium alkanebisphosphinate such as calcium ethane-1,2-bis(phosphinate) [e.g., a calcium C₁₋₁₀alkanebis(phosphtnate)]; a calcium alkanebis(alkylphosphinate) such as calcium ethane-1,2-bis(methylphosphinate) [e.g., a calcium C₁₋₁₀alkanebis(C₁₋₆alkylphosphinate)]; an aluminum salt corresponding to such a calcium salt; and other metal salts; and others.

The phosphinic acid compound includes at least one member selected from the group consisting of a polyvalent metal salt of a dialkyl phosphinic acid and a polyvalent metal salt of an alkane bisphosphinic acid.

The preferred phosphinic acid compound particularly includes a metal salt of a dialkylphosphinic acid (e.g., a calcium salt and an aluminum salt) and a metal salt of an alkanebisphosphinic acid (e.g., a calcium salt and an aluminum salt) among the metal salts represented by the above-mentioned formula (1) or (2).

The mean particle size of the phosphinic acid compound measured by a laser diffraction/scattering particle size distribution measuring apparatus may be selected, for example, from the range of 0.1 to 200 µm and may preferably be 1 to 100 µm and more preferably 40 to 80 µm. An exceedingly small particle size sometimes causes the deterioration of laser light transmittance. On the other hand, an exceedingly large particle size sometimes induces the deterioration of moldability of a molded product (e.g., a small-sized molded product) or sometimes causes the decrease in flame retardancy or mechanical properties due to deterioration of dispersibility.

The proportion of the phosphinic acid compound relative to 100 parts by weight of the polyester-series resin (A) is 10 to 50 parts by weight and more preferably 12 to 45 parts by weight (for example, 15 to 40 parts by weight). In the case of too low a proportion of the metal salt, there is a possibility that improvement in flame retardancy is insufficient. In the case of too high a proportion, there is a possibility that the laser transmissivity is reduced, thereby the laser-weldability is deteriorated.

### (C) Fluorine-containing resin

The resin composition of the present invention may further contain a fluorine-containing resin. Such a fluorine-containing resin may include a homo- or copolymer of a fluorine-containing monomer, for example, a homo- or copolymer of a fluorine-containing monomer (such as tetrafluoroethylene, chlorotrifluoroethylene, vinylidene fluoride, hexafluoropropylene, or perfluoroalkyl vinyl ether), a copolymer of the fluorine-containing monomer and other copolymerizable monomers (e.g., an olefinic monomer such as ethylene or propylene, and an acrylic monomer such as (meth)acrylate), and others.

The concrete examples of the fluorine-containing resin include a homopolymer such as a polytetrafluoroethylene, a polychlorotrifluoroethylene, or a polyvinylidene fluoride; and a copolymer such as a tetrafluoroethylene-hexafluoropropylene copolymer, a tetrafluoroethylene-perfluoroalkylvinyl ether copolymer, an ethylene-tetrafluoroethylene copolymer, or an ethylene-chlorotrifluoroethylene copolymer. The fluorine-containing resins may be used singly or in combination. The preferred fluorine-containing resin includes a homo- or copolymer of tetrafluoroethylene, a copolymer of tetrafluoroethylene and (meth)acrylate, and others.

The fluorine-containing resin (C) may have a dripping inhibitory effect (that is, an effect which inhibits dripping of a molten resin on burning). Incidentally, since a fluorine-containing resin subjected to a radiation treatment or a heat treatment at a temperature of not lower than 200°C has a poor dripping inhibitory effect, a fluorine-containing resin which has not been subjected to such a treatment may be used.

The proportion of the fluorine-containing resin (C) relative to 100 parts by weight of the polyester-series resin (A) is 0.01 to 1 part by weight, preferably 0.05 to 0.7 part by weight, and more preferably 0.1 to 0.5 part by weight. Incidentally, when the proportion is too high, there is a possible deterioration of moldability due to the increase in the viscosity of the resin composition, a possible defect in the appearance of a molded product due to the generation of white spots thereon, or a possible decrease in laser welding strength due to the local deterioration of the transmittance to a laser beam.

### (D) Nitrogen-containing flame retardant

The resin composition of the present invention may further contain (D) a nitrogen-containing flame retardant. The nitrogen-containing flame retardant may include a nitrogen-containing cyclic compound such as a triazole compound or a triazine compound (e.g., an amino group-containing nitrogen-containing cyclic compound such as an amino group-containing triazole compound or an amino group-containing triazine compound), a salt of a nitrogen-containing cyclic compound, and others. In the flame retardants (D), a triazine compound (e.g., an amino group-containing triazine compound) or a salt thereof is preferred.

In the amino group-containing triazole compound as the nitrogen-containing cyclic compound, the triazole compound may include a 1,2,3-triazole (e.g., a 1H-1,2,3-triazole; and a 2H-1,2,3-triazole), a 1,2,4-triazole (e.g., a 1H-1,2,4-triazole such as guanazole; and a 4H-1,2,4-triazole such as guanazine), and others. The arbitrary atom constituting a triazole ring (particularly, a carbon atom) has an amino group(s) as substituent(s). The number of the amino groups is, for example, 1 to 3 and preferably 1 to 2.

The triazine compound may include a variety of triazines such as an amino group-containing 1,3,5-triazine or an amino group-containing 1,2,3-triazine (e.g., a 1,2,3-triazine having amino group(s) as substituent(s) at 5-position, 4,5-positions, or 4,5,6-positions, and 4-amino-benzo-1,2,3-triazine) and an amino group-containing 1,2,4-triazine (e.g., a 1,2,4-triazine having amino group(s) as substituent(s) at 3-position, 5-position, or 3,5-positions). The amino group-containing 1, 3, 5 - triazine may include, for example, a melamine [e.g., melamine, a substituted melamine (e.g., a C₁₋₄alkylmelamine such as 2-methylmelamine and guanylmelamine)], a condensation product of a melamine (melamine condensate) (e.g., melam, melem, and melon), a copolycondensed resin of a melamine (e.g., a melamine-formaldehyde resin, a phenol-melamine resin, a benzoguanamine-melamine resin, and an aromatic polyamine-melamine resin), a cyanuric amide (such as ammeline or ammelide), a guanamine [e.g., guanamine; a C₁₋₄alkylguanamine such as methylguanamine; an acylguanamine such as acetoguanamine; an aromatic guanamine such as benzoguanamine, phenylacetoguanamine, or phthaloguanamine; an alicyclic guanamine such as cyclohexaneguanamine; an aliphatic guanamine such as succinodiguanamine or adipodiguanamine; CTU-guanamine (2,4,8,10-tetraoxaspiro(5.5)undecane-3,9-bis(2-ethylgu anamine)); and acryloguanamine], and others. The arbitrary atom constituting a triazine ring (particularly, a carbon atom) has an amino group(s) as substituent(s). The number of the amino groups is, for example, 1 to 4, preferably 1 to 3, and more preferably 2 to 3.

The salt of the nitrogen-containing cyclic compound may include a salt of the above-mentioned nitrogen-containing cyclic compound (such as an amino group-containing triazole compound or an amino group-containing triazine compound) with at least one member selected from the group consisting of a nitrogen-containing cyclic compound having a hydroxyl group and an oxygen acid (e.g., a phosphoric acid, a sulfuric acid, a sulfonic acid, a nitric acid, and a boric acid). In these salts, a salt of a triazine compound with a nitrogen-containing cyclic compound having a hydroxyl group (for example, a triazine compound having a hydroxyl group, e.g., cyanuric acid or a derivative thereof (such as isocyanuric acid, ammeline, or ammelide)) and a salt of a triazine compound with a phosphoric acid (e.g., a non-condensed phosphoric acid such as orthophosphoric acid, metaphosphoric acid, phosphorous acid, or hypophosphorous acid; and a condensed phosphoric acid such as a salt of hypophosphoric acid, a salt of pyrophosphoric acid, a salt of a polyphosphoric acid, a salt of a polymetaphosphoric acid, or a salt of phosphoric anhydride) are preferred.

In the nitrogen-containing flame retardants (D), particularly, a salt of a triazine compound (e.g., an amino group-containing triazine compound) with cyanuric acid and/or isocyanuric acid is preferred. The concrete examples of such a salt include a melamine salt of cyanuric acid (e.g., melamine cyanurate), a melem salt, melam salt, melon salt, and guanamine salt corresponding to the melamine salt, and isocyanurates corresponding to these cyanurates. In order to improve the flame retardancy, stability, and from an economical viewpoint, melamine cyanurate is practically used as the flame retardant (D). The nitrogen-containing flame retardants (D) may be used singly or in combination.

The proportion of the nitrogen-containing flame retardant (D) relative to 100 parts by weight of the polyester-series resin (A) is 0.5 to 10 parts by weight, preferably 1 to 6 parts by weight, and more preferably 2 to 5 parts by weight. When the proportion of the nitrogen-containing flame retardant (D) is too high, there is a possibility that a sufficient laser welding strength cannot be obtained due to the deterioration of the laser transmissivity.

The proportion (weight ratio) of the metal salt of the phosphinic acid compound (B) relative to the nitrogen-containing flame retardant (D) [the metal salt of the phosphinic acid compound (B) / the nitrogen-containing flame retardant (D)] is 1/1 to 10/1, preferably 2/1 to 8/1, and more preferably 3/1 to 6/1.

### (E) Filler (or reinforcing material)

The resin composition may contain (E) a filler or reinforcing material in the range that the filler or reinforcing material does not have any adverse effects on the laser transmissivity. Such a filler or reinforcing material (E) may include a fibrous filler [for example, an inorganic fiber (e.g., a glass fiber, a silica fiber, an alumina fiber, a silica·alumina fiber, an aluminum silicate fiber, a zirconia fiber, a potassium titanate fiber, a whisker (e.g., a whisker of silicon carbide, alumina, boron nitride, or the like), and a wollastonite) and an organic fiber (e.g., an aliphatic or aromatic polyamide, an aromatic polyester, a fluorine-containing resin, or an acrylic resin such as a polyacrylonitrile, a fiber formed form a rayon or the like, and a carbon fiber)], a plate-like filler [for example, a talc, a mica, and a glass flake], a particulate filler [for example, a glass bead, a glass powder (or a powdered glass), a milled fiber (e.g., a milled glass fiber), a clay, an organized clay, a porcelain clay (a kaolin), potassium titanate, calcium carbonate, titanium oxide, a feldspathic mineral, and a graphite].

The mean diameter of the fibrous filler may be, for example, 1 to 50 µm (preferably 3 to 30 µm), and the mean length thereof may be, for example, 100 µm to 3 mm (preferably 300 µm to 1 mm). Moreover, the mean particle size of the plate-like or particulate filler may be, for example, 0.1 to 100 µm and preferably 0.1 to 50 µm. These fillers may be used singly or in combination.

In these fillers (E), a laser-transmitting filler is preferred. Such a filler may be selected depending on the wavelength of the laser beam and may include, for example, a glassy filler or a reinforcing material (e.g., a glass fiber, a glass flake, and a glass bead) and others. In particular, a glass fiber is preferred.

Incidentally, the shape at cross section in the glass fiber is not particularly limited to a specific one and may include a circular form, an elliptical form (or an oval form, including a distorted elliptical form such as a cocoon-shaped form), a semicircular form, a circular arc form, a polygonal form (such as a triangle or an orthogon (e.g., a rectangle and a trapezoid)), or a form similar thereto, and others. Due to a high strength and flame retardancy, the shape at cross section in the glass fiber is preferably a rectangular or an almost rectangular form (particularly, an oblong). In such a glass fiber, the ratio of the major axis (the maximal distance in the cross section) relative to the minor axis (the maximum distance in the direction perpendicular to the major axis) may be, for example, 1.3 to 10, preferably 1.5 to 5, and more preferably 2 to 4.

The cross-sectional area of the glass fiber may be, for example, 50 to 500 µm², preferably 100 to 300 µm², and more preferably 140 to 300 µm² due to a high strength and flame retardancy.

In order to prevent the molded product from deformation, the mean fiber length of the glass fiber is preferably a shorter one. On the other hand, In order to improve mechanical properties, the mean fiber length thereof is preferably a longer one (e.g. , not shorter than 30 µm). Therefore, the mean fiber length may suitably be selected depending on required performances as usage in view of a balance between the mechanical properties and the deformation. The mean fiber length may be, for example, 20 to 1500 µm, preferably 50 to 1000 µm, and more preferably 70 to 800 µm.

A single-species of the glass fibers may be used alone, orapluralityof the glass fibers different in species may be used in combination. Moreover, in the fillers, the glass fiber and other fillers (particularly, the inorganic filler or others) may be used in combination. The above-mentioned other fillers may be used singly or in combination.

Incidentally, the glass fiber may be prepared by spinning a molten glass by using a nozzle with any bushing shape corresponding to the above-mentioned shape at cross section in the fiber (that is, a shape of a bushing (a pore shape) from which the molten glass is discharged), for example, a circular form, an oval form, an elliptical form, a rectangular form, and a slit form). Moreover, the glass fiber may be prepared by spinning a molten glass from a plurality of nozzles having various cross sections (including a circular form) and disposed in contiguity with each other and bonding the spun molten glasses with each other to produce a single filament.

If necessary, the filler (E) such as the glass fiber may be treated with a conventional sizing agent or surface-treating agent (or a finishing agent). The sizing agent or surface-treating agent may include, for example, a functional compound such as an epoxy-series compound, an isocyanate-series compound, a silane-series compound, or a titanate-series compound. Incidentally, the filler may be treated with the above-mentioned sizing agent or surface-treating agent before mixing the filler with other components (e.g., the components (A), (B), (C) and/or (D)) or treated with the above-mentioned sizing agent or surface-treating agent by adding the agent in the process of mixing the filler with other components. The proportion of the sizing agent or surface-treating agent relative to 100 parts by weight of the filler (e.g., the glass fiber) is 0 to 10 parts by weight (e.g., 0.01 to 10 parts by weight) and preferably 0.05 to 5 parts by weight.

The proportion of the filler (E) relative to 100 parts by weight of the polyester-series resin (A) is 5 to 70 parts by weight and more preferably 10 to 65 parts by weight (e.g., 15 to 65 parts by weight). Depending on the species of the filler, an excessively high proportion of the filler (E) sometimes deteriorates the laser transmissivity, thereby a sufficient weld strength cannot be obtained.

The resin composition of the present invention may contain various additives depending on applications as far as the advantages of the present invention are not deteriorated. The additive which may be added to the composition may include, for example, a stabilizer (e.g., an antioxidant, an ultraviolet ray absorbing agent, a light stabilizer, and a heat stabilizer), a nucleating agent (a nucleating agent for crystallization), other flame retardants (e.g., a sulfur-containing flame retardant, a silicon-containing flame retardant, an alcohol-series flame retardant, and a halogen-containing flame retardant), a flame-retardant auxiliary, a lubricant, a mold-release agent (or releasing agent), an antistatic agent, a coloring agent (e.g., an organic or inorganic colorant), a plasticizer, a dispersing agent, other thermoplastic resins (e.g., an amorphous or low-crystalline resin).

In these additives, for example, in order to improve the laser light transmittance, an amorphous or low-crystalline resin may be used, or in order to control the fluctuation of the laser light transmittance, a nucleating agent may be used. Moreover, in order to improve the heat resistance, an antioxidant may be used, or in order to improve the mold-releasability and moldability, a mold-release agent may be used.

The amorphous or low-crystalline resin may include a polycarbonate-series resin, a styrenic resin, a thermoplastic elastomer, and others. These resins may be usedsinglyorincombination. In these resins, for reducing the loss of flame retardancy of the resin composition, a polycarbonate or the like is preferred, and a polycarbonate may be used in combination with a styrenic resin and/or a thermoplastic elastomer (particularly, a styrenic resin) .

The nucleating agent may be an organic nucleating agent (such as a rosin) or an inorganic nucleating agent, for example, a metal oxide (e.g., a silica, an alumina, a zirconia, titanium oxide, iron oxide, and zinc oxide), a metal carbonate (e.g., calcium carbonate, magnesium carbonate, and barium carbonate), a silicate (e.g., calcium silicate, aluminum silicate, and a talc), a metal carbide (e.g., silicon carbide), a metal nitride (e.g., silicon nitride, boron nitride, and tantalum nitride). These nucleating agents may be used singly or in combination. The nucleating agent may be a particulate or plate-like one.

Incidentally, the mean particle size of the nucleating agent (e.g., the inorganic nucleating agent) may be, for example, 0.01 to 10 µm and preferably 0.02 to 5 µm. The proportion of the nucleating agent relative to 100 parts by weight of the polyester-series resin (A) may be, for example, 0.001 to 5 parts by weight and preferably 0.01 to 3 parts by weight.

The antioxidant may include a conventional antioxidant, for example, a hindered phenol-series antioxidant, a hindered amine-series antioxidant, a phosphorus-containing antioxidant, and a hydroquinone-series antioxidant. The antioxidants may be used singly or in combination. In these antioxidants, a phosphorus-containing antioxidant is preferred. The phosphorus-containing antioxidant specifically includes a mono- to tris (branched chain C₃₋₆alkyl-phenyl) phosphite such as tris(2,4-di-t-butylphenyl) phosphite or bis(2-t-butylphenyl)phenyl phosphite; a (branched chain C₃₋₆alkyl-aryl) phosphite of an aliphatic polyhydric alcohol such as bis(2,6-di-t-butyl-4-methylphenyl)pentaerythritol diphosphite, bis(2,4-di-t-butylphenyl)pentaerythritol diphosphite, or tetrakis(2,4-di-t-butylphenyl)-4,4'-biphenylene diphosphite; a triphenylphosphate-series compound such as tris(2,4-di-t-butylphenyl) phosphate; a metal salt of phosphoric acid (e.g., an alkali or alkaline earth metal salt of phosphoric acid (or a hydrate thereof) such as monobasic calcium phosphate or monobasic sodium phosphate monohydrate). In these phosphorus-containing antioxidants, a (branched chain C₃₋₆alkyl-aryl) phosphite of an aliphatic polyhydric alcohol, a metal salt of phosphoric acid, or others is preferred. The phosphorus-containing antioxidant may be used in combination with other antioxidants, for example, a hindered phenol-series antioxidant [e.g., a bis- to tetrakis[3-(3,5-di-branched chain C₃₋₆alkyl-4-hydroxyphenyl)propionate] of an aliphatic polyhydric alcohol, such as glycerin tris[3-(3,5-di-t-butyl-4-hydroxyphenyl)propionate] or pentaerythritol tetrakis[3-(3,5-di-t-butyl-4-hydroxyphenyl)propionate]].

The proportion of the antioxidant relative to 100 parts by weight of the polyester-series resin (A) may be, for example, 0.005 to 3 parts by weight, preferably 0.01 to 1.5 parts by weight (e.g., 0.02 to 1 part by weight), and more preferably 0.05 to 0.5 part by weight. Incidentally, when the proportion of the antioxidant is too high, there is a possible reduction of dispersibility of the antioxidant in the resin or a possible bleeding out of the antioxidant on the surface of a molded product. In addition, there is a possible defect in the external appearance of the molded product due to the bleeding out.

The mold- release agent which may be used may include, for example, a higher fatty acid (e.g., an ester (including a partial ester) of a saturated or unsaturated C₁₀₋₃₀ fatty acid such as stearic acid, montanic acid, or oleic acid) with a polyhydric alcohol (e.g., a (poly)alkylene glycol such as ethylene glycol or a polyethylene glycol, and an aliphatic polyhydric alcohol such as glycerin, trimethylolpropane, pentaerythritol, or sorbitan), a wax [e.g., a paraffin, amicrowax, and a polyolefinic wax (e.g., a polyC₂₋₄₀olefinic wax such as a polyethylene wax or a polypropylene wax (e.g.,preferably a low-molecular weight polyethylene wax), and an olefin copolymer wax such as an ethylene copolymer wax)]. The concrete examples of the ester include an ester of a (poly)alkylene glycol with a fatty acid (for example, an mono- or diester, e. g. , an ester of ethylene glycol with distearic acid and an ester of a polyethylene glycol with monolauric acid), an ester of glycerin with a fatty acid (for example, a mono- to triester, e.g., an ester of glycerin with monostearic acid and an ester of glycerin with tripalmitic acid), an ester of trimethylolpropane with a fatty acid (for example, a mono-to triester, e.g., an ester of trimethylolpropane with monopalmitic acid), an ester of pentaerythritol with a fatty acid (for example, a mono- to tetraester, e.g., an ester of pentaerythritol with stearic acid), an ester of sorbitan with a fatty acid (for example, a mono- to tetraester, e.g., an ester of sorbitan with monostearic acid), and others. The mold-release agents may be used singly or in combination.

The proportion of the mold-release agent relative to 100 parts by weight of the polyester-series resin (A) may be, for example, 0.005 to 3 parts by weight and preferably 0.01 to 1. 5 parts by weight. Incidentally, when the proportion of the mold-release agent is too high, there is a possible reduction of dispersibility of the mold-release agent in the resin or a possible bleeding out of the mold-release agent on the surface of a molded product. In addition, there is a possible defect in the external appearance of the molded product due to the bleeding out.

The resin composition of the present invention has an excellent flame retardancy and a flame retardancy in accordance with UL94 standard (Subject 94 of Underwriters Laboratories Inc.) of flame retardancy grade V-0 in a molded product comprising the resin composition and having a thickness of 1 mm. In addition, the resin composition has a high f lame retardancy even in a thin molded product thereof. Even when the thickness of the molded product is not more than 1 mm, for example, 0.6 to 1 mm (e.g., 0.8 to 1 mm) and preferably 0.7 to 0.9 mm (particularly, 0.8 mm), the resin composition can achieve a flame retardancy in accordance with UL94 standard of flame retardancy grade V-0.

Moreover, the resin composition has a high laser transmissivity and is used as a member located in a side transmitting a laser beam in a laser welding (a laser-transmittable member). The laser light transmittance of the resin composition is, for example, less than 15% (e.g., 15 to 50%), and usually 16 to 40% (e.g., 17 to 30%) at a thickness of 2 mm in a molded product comprising the resin composition.

Incidentally, the resin composition may have a laser light transmittance within the above-mentioned range to a laser beam wavelength used for a laser welding (for example, any one of wavelengths within the after-mentioned range (e.g., a wavelength of 940 nm)).

Thus the resin composition of the present invention has both flame retardancy and laser transmissivity at high levels although the base resin is a polyester-series resin (e.g., a PBT-series resin). Therefore, the resin composition is useful as a resin composition for laser welding. In particular, the resin composition is useful for forming a laser-transmittable member. Moreover, the resin composition has excellent properties such as moldability, mechanical strength, heat resistance, chemical resistance, and others.

Incidentally, the resin composition may contain a coloring agent (for example, coloring agents described in Japanese Patent Application Laid-Open No. 309694/2000 (JP-A-2000-309694) or Japanese Patent Application Laid-Open No. 71384/2001 (JP-A-2001-71384)) as far as the transmissivity to a laser beam used for welding is not remarkably deteriorated. The coloring agent may include a laser beam-nonabsorbable coloring agent (an inorganic or organic colorant), for example, a yellow colorant (e.g., an inorganic pigment such as a cadminum yellow, and an organic pigment such as a benzidine yellow), an orange colorant (e.g., a hansa yellow), a red pigment (e.g., an inorganic pigment such as a red pigment, and an organic pigment such as a lake red), a blue pigment (e.g., an inorganic pigment such as a cobalt blue, and an organic pigment such as a copper phthalocyanine blue), a green colorant (e.g., an inorganic pigment such as a chrome green, and an organic pigment such as a copper phthalocyanine green), and a purple colorant. Such a coloring agent may be used singly, or a plurality of the coloring agents may be used in combination for adjusting the composition to a desired color tone. For example, the resin may be colored to an achromatic color (gray or black) by utilizing a subtractive mixture (a plurality of the colorants, e. g. , a combination of the yellow colorant and the purple colorant, and a combination of the yellow colorant, the red colorant and the blue colorant).

The amount of the coloring agent is not particularly limited to a specific one. The amount of the coloring agent relative to 100 parts by weight of the PBT-series resin may be, for example, 0.001 to 5 parts by weight and preferably 0.01 to 2 parts by weight.

The resin composition of the present invention may be produced by mixing or kneading (melt-kneading) the polyester-series resin (A) and the metal salt of the phosphinic acid compound (B), and if necessary other components by a conventional manner. For example, the resin composition may be produced by (1) a process comprising mixing each component, kneading and extruding the resulting mixture into pellets with a single screw or twin screw extruder, and optionally molding a product from the pellets, (2) a process comprising once making pellets (master batch) different in formulation, mixing (diluting) the pellets in a certain ratio, and molding a product (e.g., pellets) having a certain formulation, (3) a process comprising directly feeding one or not less than two of the components in a molding machine, and others. Incidentally, the molded product such as pellets may be prepared, for example, by melt-kneading components excluding fragile components (e.g., a glassy reinforcing material) and then mixing the kneaded matter with the fragile components (glassy reinforcing material) or feeding the fragile components through a side feed port of an extruder therein. Incidentally, in order to mix each component uniformly, part of the resin component (e.g., a polyester-series resin) may be pulverized, and the resulting pulverized matter may be mixed with other components.

### [Molded product (resin molded product)]

The molded product (resin molded product) of the present invention comprises the above-mentioned resin composition and is used for forming a laser-transmittable member in a laser welding (or a member located or disposed in a transmitting side in a laser welding). The resin molded product is able to be brought into contact with a laser-absorbable resin molded product (counterpart material or another resin molded product) (particularly, into contact with a surface of the laser-absorbable resin molded product) and is bondable to the counterpart material by a laser beam.

Such a molded product may be formed by melt-kneading the resin composition and subjecting the kneaded matter to a conventional manner such as an extrusion molding, an injection molding, a compression molding, a blow molding, a vacuum molding, a rotational molding, or a gas injection molding. The molded product is usually obtained by an injection molding. The condition of the injection molding may suitably be selected depending on the species of the polyester-series resin. For example, the resin composition may be melt-kneaded at 200 to 300°C and preferably 250 to 280°C, the kneaded matter may be formed into pellets if necessary, and the kneaded matter (or the pellets) may be subjected to an injection molding at a cylinder temperature of 200 to 300°C (e.g., 250 to 280°C) by using an injection molding machine. Incidentally, the mold temperature may be selected from the range of 40 to 90°C. In order to maintain the laser transmissivity, it is preferable that the mold temperature be 40 to 80°C (e.g., 45 to 80°C), particularly, 46 to 80°C.

The shape (or configuration) of the molded product is not particularly limited to a specific one. Since the molded product is bonded to a counterpart material (other molded product comprising a resin) through a welding by a laser, the molded product usually has a shape having at least a contact surface (e.g. , a flat surface), for example, a plate-like form. Moreover, the molded product of the present invention at least has a laser beam-transmitting area or part (a laser-welding area). The thickness of the area (the thickness to the direction in which a laser beam transmits) may be, for example, 0.1 to 2 mm (e.g., 0.2 to 2 mm), and preferably 0.5 to 1.5 mm. The molded product may have such a laser-welding area in the area of the above-mentioned contact surface. The laser light transmittance in the laser-transmitting area is, for example, 12 to 100%, preferably 15 to 80%, and more preferably 16 to 50% (e.g., 17 to 40%).

Since the molded product has an excellent laser-weldability, usually, the molded product can easily be bonded to a resin molded product as a counterpart material by laser welding. Incidentally, if necessary, the laser welding may be used in combination with other welding manner (e.g., a vibration welding, an ultrasonic welding, and a hot plate welding).

### [Composite molded product]

The composite molded product comprises a first resin molded product comprising the resin composition and a resin molded product (a second resin molded product or an adherend) which comprises a laser-absorbable counterpart material and is bonded to the first resin molded product by laser welding. Incidentally, the first resin molded product at least has a laser-transmittable area (a laser-welding area) as described above. In the composite molded product, the second resin molded product is bonded to such a laser-transmitting area of the first resin molded product. The first resin molded product and the second resin molded product are usually united at least partly by welding.

The resin constituting the second resin molded product is not particularly limited to a specific one and may include a variety of thermoplastic resins, for example, an olefinic resin, a vinyl-series resin, a styrenic resin, an acrylic resin, a polyester-series resin, a polyamide-series resin, and a polycarbonate-series resin. In these resins, the second resin moldedproduct may comprise the same kind or type of resin as the base resin constituting the first resin molded product (the resin composition), for example, a polyester-series resin such as a PBT-series resin or a PET-series resin (an aromatic polyester-series resin) or a composition thereof. In order to further enhance the flame retardancy of the composite molded product, the second resin molded product may have flame retardancy obtained by adding a flame retardant thereto. Moreover, the both first and second resin molded products may comprise the above-mentioned flame-retardant resin composition. Incidentally, in the present invention, since the first resin molded product has an excellent flame retardancy, the composite molded product can have a practically enough flame retardancy without addition of a flame retardant to the second resin molded product.

The second resin molded product may contain a laser absorbent (or an absorbent for a laser beam) or a coloring agent. The coloring agent may be selected depending on the wavelength of the laser beam, and may include an inorganic pigment [for example, a black pigment such as a carbon black (e.g., an acetylene black, a lampblack, a thermal black, a furnace black, a channel black, and Ketjen black), a red pigment (such as an iron oxide red), an orange pigment (such as a molybdate orange), and a white pigment (such as titanium oxide)], an organic pigment (e.g., a yellow pigment, an orange pigment, a red pigment, a blue pigment, and a green pigment), and others. These absorbents or coloring agents may be used singly or in combination. A black pigment or dye, in particular, a carbon black, may usually be employed as the absorbent. The mean particle size of the carbon black may usually be 10 to 1000 nm and preferably 10 to 100 nm. The proportion of the coloring agent is 0.1 to 10% by weight and preferably 0.5 to 5% by weight (e.g., 1 to 3% by weight) relative to the total amount of the second resin molded product. Moreover, after making the first and the second molded products come into contact by interposing a resin sheet (e.g., a PBT-series resin sheet) containing a laser absorbent or a coloring agent (e.g., a carbon black) between these molded products or by coating (or applying) a laser absorbent between these molded products, these molded products may be bonded together by a laser beam irradiation. Incidentally, the details of the above-mentioned resin sheet containing the coloring agent may refer to, for example, Japanese Patent No. 1829720.

The composite molded product may be produced by bonding the first resin molded product to the second resin molded product. For example, the bonding may be conducted by the following manner: bringing the first resin molded product into contact with the second resin molded product (particularly, bringing at least the laser-transmitting area of the first resin molded product into contact with a surface of the second resin molded product), irradiating a laser beam in a direction from the first resin molded product (the laser-transmittable member) toward the second resin molded product to melt at least part of the interface, and cooling these molded products in a state which these products are in contact with each other (or are welded) in at least the molten area. In the present invention, since the laser-transmittable member, that is, the first resin molded product, comprises the flame-retardant resin composition having an excellent laser transmissivity, the first resin molded product can be bonded to the second resin molded product by laser welding and can impart a high flame retardancy to the resulting composite molded product. Incidentally, if necessary, through the use of a lens system (e.g., a condenser), the contact surface between the first and the second molded products may be welded by focusing the laser beam on the interface.

The species of the laser beam is not particularly limited to a specific one. For example, there may be used a laser beam having a wavelength of 600 to 2000 nm, preferably 700 to 1500 nm, and more preferably 800 to 1100 nm.

The laser beam source utilizable for laser welding the molded product may include, for example, a dye laser, a gas laser (e.g., an excimer laser, an argon laser, a krypton laser, and a helium-neon laser), a solid-state laser (e.g., a YAG LASER), and a semiconductor laser. A pulsed laser is usually employed as the laser beam.

Incidentally, in the laser welding, the laser-scanning rate (or moving speed of a laser-irradiation position on a sample) is not particularly limited to a specific one and may arbitrarily be selected. In order to prevent imperfect welding and enhance the weld strength, the laser-scanning rate is preferably 0 to 150 mm/second, preferably 1 to 100 mm/second, and more preferably 2 to 50 mm/second.

### INDUSTRIAL APPLICABILITY

The laser-weldable (or laser-welding) flame-retardant resin composition of the present invention and amolded product formed therefrom (a laser-transmittable member) have an excellent laser transmissivity and a high flame retardancy and can be applied to various applications, for example, an electric or electronic device part, an office automation (OA) device part, a household electrical appliance part, a mechanical device part, an automotive part, and others. In particular, the molded product and the composite molded product can preferably be utilized for an automotive electrical component or part (e.g., various control units, and an ignition coil part), a motor part, various sensor parts, a connector part, a switch part, a relay part, a coil part, a transformer part, a lamp part, and others.

### EXAMPLES

The following examples are intended to describe this invention in further detail and should by no means be interpreted as defining the scope of the invention.

### Examples 1 to 13 and Comparative Examples 1 to 6

### (i) Preparation of pellet

To a polybutylene terephthalate (PBT)-series resin shown in Table 1 were added a phosphinic acid compound (B-1) or (B-2), a nitrogen-containing flame retardant (D-1), and/or an inorganic filler (E-1) or (E-2) shown in Table 1 in a proportion shown in Table 1, and the blend was mixed uniformly by using a V-shaped blender. With the use of a twin-screw extruder having a screw diameter of 30 mmφ, the resulting mixture was melt-mixed with a fluorine-containing resin (C-1) or (C-2) in a proportion shown in Table 1 at a barrel temperature of 260°C while feeding the fluorine-containing resin from a main feed port or a side feed port, and the molten mixture was discharged from a die to give a strand. The resulting strand was cooled and then cut to give a pellet. Incidentally, the pellet contains a phenolic antioxidant and a mold-release agent.

On the other hand, in Comparative Examples, an example which did not use any phosphinic acid compound (Comparative Example 6) and examples which used other flame retardants (F-1) to (F-5) instead of the phosphinic acid compound (Comparative Examples 1 to 5) were conducted as comparative examples in accordance with the above-mentioned manner.

### (ii) Production of molded product and laser welding

Using the pellet obtained in the above-mentioned step (i), a resin molded product A (8 cm long, 1 cm wide, and 2 mm high) was molded with the use of an injection molding machine (manufactured by Toshiba Corporation) under the conditions of a cylinder temperature of 260°C and a mold temperature of 80°C. Moreover, a colored resin molded product (adherend) B was molded by the same manner as in that of the product A except for using 100 parts by weight of the above-mentioned pellet and 3 parts by weight of a carbon black as a coloring agent (manufactured by Win Tech Polymer Ltd., trade name "2020B"), and the product B was used for bonding to the resin molded product A by welding. Incidentally, the resin molded product B serves as a heating element by a laser beam.

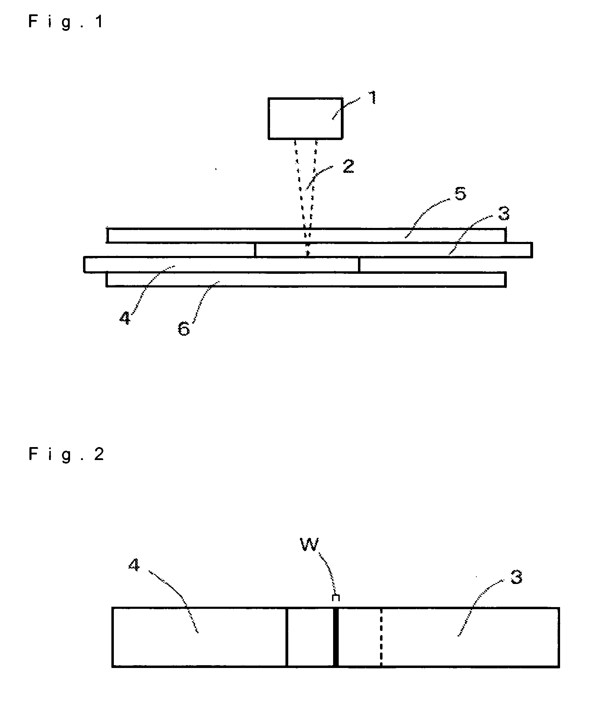

As shown in Fig. 1 and Fig. 2, the resin molded product A (3) was partly superimposed on the resin molded product B (4), and these products were sandwiched and fixed between a quartz glass plate (5) and a metal plate (6). A laser beam (2) having a wavelength of 940 nm from a light source (1) was focused and condensed on the contact surface between the resin molded products A and B in a line width W (2 mm), and irradiated from the side of the resin molded product A (3) to weld the molded products with the use of a laser welding machine manufactured by Leister Process Technologies ("MODULAS welding system C type") under the conditions of a laser output of 40 W and a scanning rate of 10 mm/second.

Incidentally, in Examples and Comparative Examples, various characteristics and properties were evaluated according to the following measuring methods.

### (1) Flammability test (UL-94)

Five pieces of test piece (thickness: 0.8 mm) were formed from each of the resin compositions obtained in each of Examples and Comparative Examples. In accordance with the method of UL94 standard (Subject 94 of Underwriters Laboratories Inc.), the flame retardancy and the dropping property in a burning test was examined by using the five pieces of test piece. Regarding the flame retardancy, based on the criteria described in UL94, each resin composition was classified into "V-0", "V-1", "V-2", and "not V" (which does not apply in these "V" ranks).

### (2) Laser light transmittance

The laser light transmittance of the resin molded product A was measured at a wavelength of 940 nm by using a spectrophotometer (manufactured by JASCO Corporation, V570).

### (3) Measurement of weld strength

The resin molded product A and the resin molded product B which had been bonded together by laser welding were pulled and sheared by using a tensile tester (manufactured by Orientec Co., Ltd., RTC-1325) at a rate of 5 mm/minute, and the weld strength was determined.

In Examples and Comparative Examples, the following components were used.

### (A) PBT-series resin

(A-1) Polybutylene terephthalate (IV = 0.8) (manufactured by Win Tech Polymer Ltd.)
(A-2) Polybutylene terephthalate (IV = 1.0) (manufactured by Win Tech Polymer Ltd.)
(A-3) Polybutylene terephthalate modified with isophthalic acid (manufactured by Win Tech Polymer Ltd.)
(A-4) Polyethylene terephthalate modified with isophthalic acid (manufactured by Teijin Fibers Ltd.)

### (B) Phosphinic acid compound

### (B-1) Aluminum 1,2-diethylphosphinate prepared by the following method

1, 2-Diethylphosphinic acid (2106 g (19.5 mol)) was dissolved in 6. 5 liters of water. To the solution was added 507 g (6.5 mol) of aluminum hydroxide while stirring violently. The resulting mixture was heated to 85°C. The mixture was stirred at 80 to 90°C for 65 hours in total. Then the mixture was cooled down to 60°C and subjected to a suction filter. The resulting residue was dried in a vacuum drying cabinet at 120°C until the weight of the residue became constant. Fine powder (2140 g) which did not melt at a temperature of not higher than 300°C was obtained. The yield was 95% of the theoretical estimate. The particle size of the obtained fine powder was measured by using a laser diffraction/scattering particle size distribution measuring apparatus (manufactured by Horiba, Ltd., apparatus name LA920), and the mean particle size thereof was 55 µm.

### (B-2) Calcium 1,3-ethane-1,2-bismethylphosphinate

Ethane-1,2-bismethylphosphinic acid (325.5 g (1.75 mol)) was dissolved in 500 ml of water. To the solution was added 129.5 g (1.75 mol) of calciumhydroxide in discrete portions over one hour while stirring violently. The resulting mixture was stirred at 90 to 95°C for several hours, cooled down, and subjected to a suction filter. The resulting residue was dried in a vacuum drying cabinet at 150°C to give a product (335 g). The product did not melt at a temperature of not higher than 380°C. The yield was 85% of the theoretical estimate.

### (B-3) Aluminum 1,2-diethylphosphinate prepared by the following method

The fine particle having a mean particle size of 55 µm obtained in the above-mentioned (B-1) was passed through a 400-mesh sieve, and the residue on sieve was collected. The particle size of the fine particle was measured by the same manner as that in the item (B-1), and the mean particle size thereof was 72 µm.

### (B-4) Aluminum 1,2-diethylphosphinate prepared by the following method

Fine particle having a mean particle size of 25 µm obtained according to the above-mentioned (B-1) was dry-pulverized by using a jet mill. The particle size of the obtained fine particle was measured by the same manner as that in the item (B-1), and the mean particle size thereof was 4 µm.

### (C) Fluorine-containing resin

(C-1) Fluorine-containing resin (manufactured by Mitsubishi Rayon Co., Ltd., METABLEN A3800)
(C-2) Fluorine-containing resin (manufactured by Asahi Glass Fluoropolymers, Inc., AFLON CD076)

### (D) Nitrogen-containing flame retardant

(D-1) Melamine cyanurate (manufactured by Ciba Specialty Chemicals K.K., MC50)

### (E) Inorganic filler

(E-1) Glass fiber (manufactured by Nitto Boseki Co., Ltd., CSG3PA830, the shape at cross section: rectangular form)
(E-2) Glass fiber (manufactured by Nitto Boseki Co., Ltd., CS3PE941, the shape at cross section: circular form)
(E-3) Glass fiber (manufactured by Nitto Boseki Co., Ltd., CSH3PA860S, the shape at cross section: oval form)

### (F) Other flame retardants

(F-1) Brominated epoxy (manufactured by Sakamoto Yakuhin Kogyo Co., Ltd., SRT5000)
(F-2) Pentabromopolybenzyl acrylate (manufactured by Dead Sea Bromine Group, FR1025)
(F-3) Ethylene bis-tetrabromophthalimide (manufactured by Albemarle Corporation, SYTEX BT-93)
(F-4) Antimony trioxide (manufactured by Nihon Seiko Co., Ltd., PATOX-M)
(F-5) Condensed phosphoric ester (manufactured by Daihachi Chemical Industry Co., Ltd.)
The results of Examples and Comparative Examples are shown in Tables 1 and 2.

[Table 1]

**Table 1**

| | | Examples | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| PBT-series resin (parts by weight) | A-1 | | | 100 | 100 | | | | | 60 | 60 | 60 | 75 | 75 |
| | A-2 | 100 | 100 | | | 100 | 100 | 100 | 50 | | | | | |
| | A-3 | | | | | | | | 50 | | | | 25 | 25 |
| | A-4 | | | | | | | | | 40 | 40 | 40 | | |
| Phosphinic acid compound (parts by weight) | B-1 | 16 | | 36 | 23 | 16 | | | 16 | 36 | 36 | 36 | 36 | 36 |
| | B-2 | | 16 | | | | | | | | | | | |
| | B-3 | | | | | | 16 | | | | | | | |
| | B-4 | | | | | | | 16 | | | | | | |
| Fluorine-containing resin (parts by weight) | C-1 | 0.3 | 0.3 | | 0.3 | | 0.3 | 0.3 | 0.3 | 0.3 | 0.3 | 0.3 | | |
| | C-2 | | | | | 0.3 | | | | | | | | |
| Nitrogen-containing flame retardant (parts by weight) | D-1 | | | | 4.5 | | | | | | | | | |
| Glass fiber (parts by weight) | E-1 | | | 59 | 23 | | | | | 59 | | | 59 | |
| | E-2 | | | | | | | | | | 59 | | | |
| | E-3 | | | | | | | | | | | 59 | | 59 |
| Other flame retardant (parts by weight) | | | | | | | | | | | | | | |
| UL94; Flame retardancy class | | V-0 | V-0 | V-0 | V-0 | V-0 | V-0 | V-0 | V-0 | v-0 | V-0 | V-0 | V-0 | V-0 |
| UL94; Total flame-retardant time (sec.) | | 9 | 14 | 25 | 26 | 13 | 15 | 20 | 16 | 45 | 42 | 29 | 41 | 43 |
| UL94; Number of pieces (10 sec. or longer) | | 0 | 0 | 0 | 0 | 0 | 0 | 0 | 0 | 0 | 0 | 0 | 0 | 0 |
| UL94; Number of pieces that ignition of cotton occurs | | 0 | 0 | 0 | 0 | 0 | 0 | 0 | 0 | 0 | 0 | 0 | 0 | 0 |
| 990 nm transmittance (thickness: 2 mm) | | 19.2 | 19.8 | 16.0 | 15.2 | 19.5 | 19.0 | 16.0 | 22.3 | 19.9 | 18.9 | 19.5 | 15.7 | 16.0 |
| Weld strength (MPa) | | 20 | 23 | 15 | 11 | 20 | 18 | 15 | 25 | 22 | 20 | 22 | 12 | 11 |

[Table 2]

**Table 2**

| | | Comparative Examples | | | | | |
|---|---|---|---|---|---|---|---|
| | | 1 | 2 | 3 | 4 | 5 | 6 |
| PBT-series resin (parts by weight) | A-1 | 100 | 100 | 100 | 100 | 100 | 100 |
| Phosphinic acid compound (parts by weight) | | | | | | | |
| Fluorine-containing resin (parts by weight) | C-1 | 0.6 | 1.0 | 1.0 | 0.8 | 0.9 | |
| Nitrogen-containing flame retardant (parts by weight) | D-1 | | | | 63 | | |
| Glass fiber (parts by weight) | E-2 | | 61 | 57 | 85 | 85 | 43 |
| Other flame retardant (parts by weight) | F-1 | | 27 | | | | |
| | F-2 | | | 20 | | | |
| | F-3 | 17 | | | | | |
| | F-4 | 5.6 | 12 | 10 | | | |
| | F-5 | | | | 37 | 43 | |
| UL94; Flame retardancy class | | V-0 | V-0 | V-0 | V-0 | Not V | Not V |
| UL94; Total flame-retardant time (sec.) | | 7 | 6 | 10 | 33 | (Burnout) | (Burnout) |
| UL94; Number of pieces (10 sec. or longer) | | 0 | 0 | 0 | 0 | 5 | 5 |
| UL94; Number of pieces that ignition of cotton occurs | | 0 | 0 | 0 | 0 | 5 | 5 |
| 940 nm transmittance (thickness: 2 mm) | | 3.8 | 6.8 | 6.6 | 2.3 | 17.4 | 20.2 |
| Weld strength (MPa) | | 0 | 0 | 0 | 0 | 11 | 20 |

As apparent from the Tables, the examples using the phosphinic acid compound had a high weld strength and excellent results of the flame retardancy test due to high laser transmissivity. On the contrary, in the comparative Examples using not the phosphinic acid compound but the conventional flame retardant, the molded products had a high flame retardancy, while the products could not be bonded together by the laser welding (Comparative Examples 1 to 4). Moreover, in the comparative Examples, the molded products could be bonded together by the laser welding, while the products had a very low flame retardancy (Comparative Examples 5 and 6).

## Claims

1. Use of a flame-retardant resin composition for forming a laser-transmittable member in a laser welding, which comprises
(A) a polyester-series resin and
(B) at least one phosphinic acid compound selected from the group consisting of a metal salt of a dialkyl phosphinic acid and a metal salt of an alkanebisphosphinic acid,
wherein the proportion of the phosphinic acid compound (B) is 10 to 50 parts by weight relative to 100 parts by weight of the polyester-series resin (A).

2. The use according to claim 1, wherein the polyester-series resin (A) comprises a polybutylene terephthalate-series resin.

3. The use according to claim 1, wherein, regarding the phosphinic acid compound (B), the metal salt of the dialkyl phosphinic acid is represented by the following formula (1) and the metal salt of the alkanebisphosphinic acid is represented by the following formula (2): 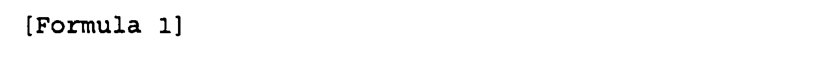 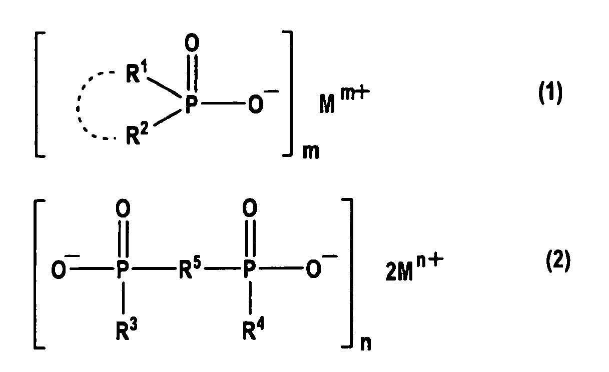 wherein R¹, R², R³, and R⁴ are the same or different and each represents an alkyl group, R⁵ represents an alkylene group, M^{m+} represents a metal having m-valences, and "m" denotes an integer of 2 to 4; Mⁿ⁺ represents a metal having n-valences, and "n" denotes an integer of 2 to 4.

4. The use according to claim 1, wherein the resin composition has a laser light transmittance of not less than 15% for a molded product comprising the resin composition and having a thickness of 2 mm.

5. The use according to claim 1, wherein the resin composition further comprises (C) a fluorine-containing resin in a proportion of 0.01 to 1 part by weight relative to 100 parts by weight of the polyester-series resin (A).

6. The use according to claim 1, wherein the resin further comprises (D) a nitrogen-containing flame retardant in a proportion of 0.5 to 10 parts by weight relative to 100 parts by weight of the polyester-series resin (A).

7. The use according to claim 6, wherein the nitrogen-containing flame retardant (D) comprises a salt of a triazine compound with at least one member selected from the group consisting of cyanuric acid and isocyanuric acid.

8. The use according to claim 1, wherein the resin composition further comprises (E) a glassy filler in a proportion of 5 to 70 parts by weight relative to 100 parts by weight of the polyester-series resin (A).

9. A composite molded product comprising
a first resin molded product comprising (A) a polyester-series resin and (B) at least one phosphinic acid compound selected from the group of a metal salt of a dialkyl phosphinic acid and a metal salt of an alkane bisphosphinic acid,
wherein the proportion of the phosphinic acid compound (B) is 10 to 50 parts by weight relative to 100 parts by weight of the polyester-series resin (A) and
a second resin molded product which is laser-absorbable and is bonded to the first resin molded product by laser welding.

10. A composite molded product according to claim 9, wherein the first resin molded product has an area having a thickness of 0.1 to 2 mm, and the second resin molded product is bonded to the area of the first resin molded product.

11. A process for laser-welding a first resin molded product and a second resin molded product which is laser-absorbable,
which comprises bringing the first resin molded product into contact with the second resin molded product and irradiating a laser beam in a direction from the first resin molded product toward the second resin molded product, wherein the first resin molded product comprises a flame-retardant resin composition comprising (A) a polyester-series resin and (B) at least one phosphinic acid compound selected from the group consisting of a metal salt of a dialkyl phosphinic acid, a metal salt of an alkanebisphosphinic acid, wherein the proportion of the phosphinic acid compound (B) is 10 to 50 parts by weight relative to 100 parts by weight of the polyester-series resin (A) and the first resin molded product has a laser light transmittance of not less than 15% at a thickness of 2 mm.

12. A process according to claim 11, wherein the first resin molded product may be colored with a non-laser-absorbable coloring agent, the second resin molded product comprises a thermoplastic resin composition containing a laser absorbent or a coloring agent, a surface of the first resin molded product and a surface of the second molded product are brought into contact with each other, and the both resin molded products are bonded by a laser beam irradiation.

13. A process according to claim 11, wherein the first resin molded product has a laser-transmitting area having a thickness of 0.1 to 2 mm and a laser light transmittance of not less than 15%, a surface of the second resin molded product is brought into contact with at least the laser-transmitting area of the first resin molded product, and the laser irradiation is conducted for bonding the molded products.

14. A process according to claim 11, wherein the first resin molded product comprises a resin composition containing the following components (A) and (B), or components (A), (B) and (C):
(A) a polybutylene terephthalate-series resin,
(B) at least one phosphinic acid compound selected from the group consisting of a metal salt of a dialkyl phosphinic acid represented by the following formula (1) and a metal salt of an alkanebisphosphinic acid represented by the following formula (2): 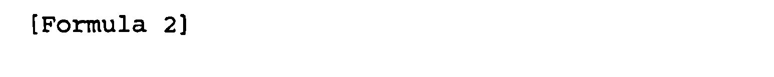 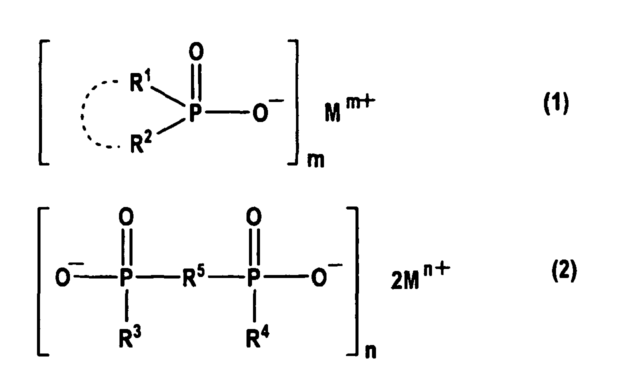 wherein R¹, R², R³, and R⁴ are the same or different and each represents an alkyl group, R⁵ represents an alkylene group, M^{m+} represents a metal having m-valences, and "m" denotes an integer of 2 to 4; Mⁿ⁺ represents a metal having n-valences, and "n" denotes an integer of 2 to 4,
(C) a fluorine-containing resin,
wherein the proportion of the phosphinic acid compound (B) is 10 to 50 parts by weight relative to 100 parts by weight of the polyester-series resin (A).

## Patentansprüche

1. Verwendung einer flammhemmenden Harzzusammensetzung zur Bildung eines laserübertragbaren Elements beim Laserschweißen, die Folgendes umfasst:
(A) ein Harz der Polyesterreihe; und
(B) wenigstens eine Phosphinsäureverbindung, die aus der Gruppe ausgewählt ist, die aus einem Metallsalz einer Dialkylphosphinsäure und einem Metallsalz einer Alkanbisphosphinsäure besteht;
wobei der Anteil der Phosphinsäureverbindung (B) 10 bis 50 Gewichtsteile beträgt, bezogen auf 100 Gewichtsteile des Harzes der Polyesterreihe (A).

2. Verwendung gemäß Anspruch 1, wobei das Harz der Polyesterreihe (A) ein Harz der Polybutylenterephthalat-Reihe umfasst.

3. Verwendung gemäß Anspruch 1, wobei bezüglich der Phosphinsäureverbindung (B) das Metallsalz der Dialkylphosphinsäure durch die folgende Formel (1) dargestellt wird und das Metallsalz der Alkanbisphosphinsäure durch die folgende Formel (2) dargestellt wird: 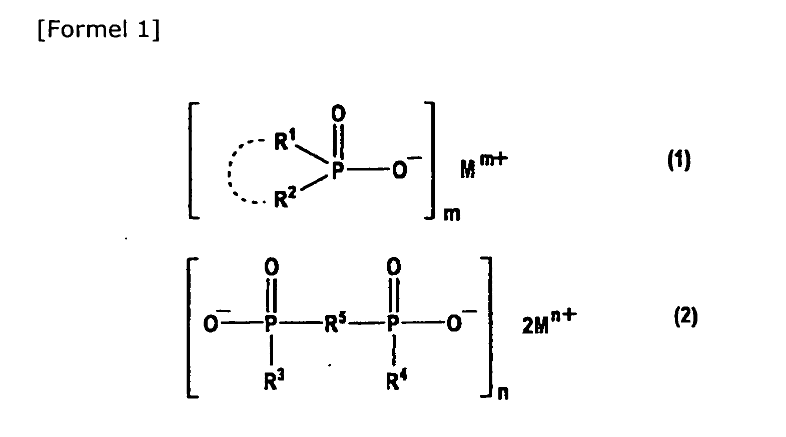 wobei R¹, R², R³ und R⁴ gleich oder verschieden sind und jeweils für eine Alkylgruppe stehen, R⁵ für eine Alkylengruppe steht, M^{m+} für ein Metall mit der Wertigkeit m steht und "m" eine ganze Zahl von 2 bis 4 bezeichnet, Mⁿ⁺ für ein Metall mit der Wertigkeit n steht und "n" eine ganze Zahl von 2 bis 4 bezeichnet.

4. Verwendung gemäß Anspruch 1, wobei die Harzzusammensetzung in einem geformten Produkt, das die Harzzusammensetzung umfasst und eine Dicke von 2 mm aufweist, eine Laserlichttransmission von nicht weniger als 15% aufweist.

5. Verwendung gemäß Anspruch 1, wobei die Harzzusammensetzung weiterhin (C) ein fluorhaltiges Harz in einem Anteil von 0,01 bis 1 Gewichtsteil umfasst, bezogen auf 100 Gewichtsteile des Harzes der Polyesterreihe (A).

6. Verwendung gemäß Anspruch 1, wobei das Harz weiterhin (D) ein stickstoffhaltiges Flammschutzmittel in einem Anteil von 0,5 bis 10 Gewichtsteilen umfasst, bezogen auf 100 Gewichtsteile des Harzes der Polyesterreihe (A).

7. Verwendung gemäß Anspruch 6, wobei das stickstoffhaltige Flammschutzmittel (D) ein Salz einer Triazinverbindung mit wenigstens einem Vertreter, der aus der Gruppe ausgewählt ist, die aus Cyanursäure und Isocyanursäure besteht, umfasst.

8. Verwendung gemäß Anspruch 1, wobei die Harzzusammensetzung weiterhin (E) einen glasartigen Füllstoff in einem Anteil von 5 bis 70 Gewichtsteilen umfasst, bezogen auf 100 Gewichtsteile des Harzes der Polyesterreihe (A).

9. Verbundstoff-Formkörper, umfassend:
einen ersten Harzformkörper, der (A) ein Harz der Polyesterreihe und (B) wenigstens eine Phosphinsäureverbindung, die aus der Gruppe ausgewählt ist, die aus einem Metallsalz einer Dialkylphosphinsäure und einem Metallsalz einer Alkanbisphosphinsäure besteht, umfasst;
wobei der Anteil der Phosphinsäureverbindung (B) 10 bis 50 Gewichtsteile beträgt, bezogen auf 100 Gewichtsteile des Harzes der Polyesterreihe (A); und
einen zweiten Harzformkörper, der laserabsorbierend ist und durch Laserschweißen mit dem ersten Harzformkörper verbunden ist.

10. Verbundstoff-Formkörper gemäß Anspruch 9, wobei der erste Harzformkörper eine Fläche mit einer Dicke von 0,1 bis 2 mm aufweist und der zweite Harzformkörper mit der Fläche des ersten Harzformkörpers verbunden ist.

11. Verfahren zum Laserschweißen eines ersten Harzformkörpers und eines zweiten Harzformkörpers, der laserabsorbierend ist;
umfassend das In-Kontakt-Bringen des ersten Harzformkörpers mit dem zweiten Harzformkörper und das Bestrahlen mit einem Laserstrahl in einer Richtung von dem ersten Harzformkörper zu dem zweiten Harzformkörper, wobei der erste Harzformkörper eine flammhemmende Harzzusammensetzung umfasst, die (A) ein Harz der Polyesterreihe und (B) wenigstens eine Phosphinsäureverbindung, die aus der Gruppe ausgewählt ist, die aus einem Metallsalz einer Dialkylphosphinsäure und einem Metallsalz einer Alkanbisphosphinsäure besteht, umfasst, wobei der Anteil der Phosphinsäureverbindung (B) 10 bis 50 Gewichtsteile beträgt, bezogen auf 100 Gewichtsteile des Harzes der Polyesterreihe (A), und der erste Harzformkörper eine Laserlichttransmission von nicht weniger als 15% bei einer Dicke von 2 mm aufweist.

12. Verfahren gemäß Anspruch 11, wobei der erste Harzformkörper mit einem nichtlaserabsorbierenden Färbemittel gefärbt sein kann, der zweite Harzformkörper eine thermoplastische Harzzusammensetzung umfasst, die eine laserabsorbierende Substanz oder ein Färbemittel enthält, eine Fläche des ersten Harzformkörpers und eine Fläche des zweiten Formkörpers miteinander in Kontakt gebracht werden und die beiden Harzformkörper durch Bestrahlung mit einem Laserstrahl aneinander gebunden werden.

13. Verfahren gemäß Anspruch 11, wobei der erste Harzformkörper eine laserdurchlässige Fläche mit einer Dicke von 0,1 bis 2 mm und eine Laserlichttransmission von nicht weniger als 15% aufweist, eine Fläche des zweiten Harzformkörpers wenigstens mit der laserdurchlässigen Fläche des ersten Harzformkörpers in Kontakt gebracht wird und die Bestrahlung mit dem Laser durchgeführt wird, um die Formkörper aneinander zu binden.

14. Verfahren gemäß Anspruch 11, wobei der erste Harzformkörper eine Harzzusammensetzung umfasst, die die folgenden Komponenten (A) und (B) oder die Komponenten (A), (B) und (C) enthält:
(A) ein Harz der Polybutylenterephthalat-Reihe;
(B) wenigstens eine Phosphinsäureverbindung, die aus der Gruppe ausgewählt ist, die aus einem Metallsalz einer Dialkylphosphinsäure, das durch die folgende Formel (1) dargestellt wird, und einem Metallsalz einer Alkanbisphosphinsäure, das durch die folgende Formel (2) dargestellt wird, besteht: 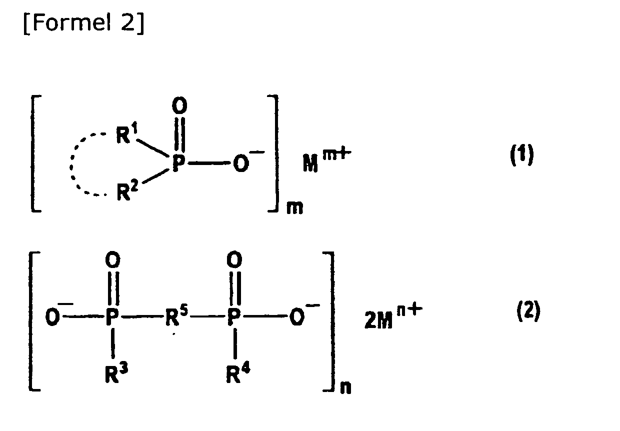 wobei R¹, R², R³ und R⁴ gleich oder verschieden sind und jeweils für eine Alkylgruppe stehen, R⁵ für eine Alkylengruppe steht, M^{m+} für ein Metall mit der Wertigkeit m steht und "m" eine ganze Zahl von 2 bis 4 bezeichnet, Mⁿ⁺ für ein Metall mit der Wertigkeit n steht und "n" eine ganze Zahl von 2 bis 4 bezeichnet;
(C) ein fluorhaltiges Harz;
wobei der Anteil der Phosphinsäureverbindung (B) 10 bis 50 Gewichtsteile beträgt, bezogen auf 100 Gewichtsteile des Harzes der Polyesterreihe (A).

## Revendications

1. Utilisation d'une composition de résine ignifuge pour former un membre capable de transmission laser dans un soudage laser, qui comprend
(A) une résine de la série des polyesters et
(B) au moins un composé d'acide phosphinique choisi dans le groupe consistant en un sel métallique d'un acide dialkylphosphinique et un sel métallique d'un acide alcanebisphosphinique,
où la proportion du composé d'acide phosphinique (B) est 10 à 50 parties en poids par rapport à 100 parties en poids de la résine de la série des polyesters (A).

2. Utilisation selon la revendication 1, où la résine de la série des polyesters (A) comprend une résine de la série du poly(butylène téréphtalate).

3. Utilisation selon la revendication 1, où, au sujet du composé d'acide phosphinique (B), le sel métallique de l'acide dialkylphosphinique est représenté par la formule (1) suivante et le sel métallique de l'acide alcanebisphosphinique est représenté par la formule (2) suivante : 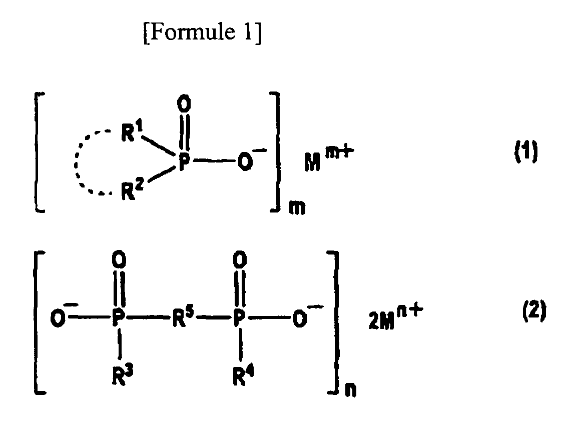 où R¹, R², R³ et R⁴ sont identiques ou différents et représentent chacun un groupe alkyle, R⁵ représente un groupe alkylène, M^{m+} représente un métal ayant m valences, et « m » désigne un entier de 2 à 4 ; Mⁿ⁺ représente un métal ayant n valences, et « n » désigne un entier de 2 à 4.

4. Utilisation selon la revendication 1, où la composition de résine a un facteur de transmission de la lumière laser de pas moins de 15 % pour un produit moulé comprenant la composition de résine et ayant une épaisseur de 2 mm.

5. Utilisation selon la revendication 1, où la composition de résine comprend en outre (C) une résine contenant du fluor dans une proportion de 0,01 à 1 partie en poids par rapport à 100 parties en poids de la résine de la série des polyesters (A).

6. Utilisation selon la revendication 1, où la résine comprend en outre (D) un ignifuge contenant de l'azote dans une proportion de 0,5 à 10 parties en poids par rapport à 100 parties en poids de la résine de la série des polyesters (A).

7. Utilisation selon la revendication 6, où l'ignifuge contenant de l'azote (D) comprend un sel d'un composé triazine avec au moins un membre choisi dans le groupe consistant en l'acide cyanurique et l'acide isocyanurique.

8. Utilisation selon la revendication 1, où la composition de résine comprend en outre (E) une charge vitreuse dans une proportion de 5 à 70 parties en poids par rapport à 100 parties en poids de la résine de la série des polyesters (A).

9. Produit moulé composite comprenant
un premier produit moulé en résine comprenant (A) une résine de la série des polyesters et (B) au moins un composé d'acide phosphinique choisi dans le groupe d'un sel métallique d'un acide dialkylphosphinique et un sel métallique d'un acide alcanebisphosphinique,
où la proportion du composé d'acide phosphinique (B) est 10 à 50 parties en poids par rapport à 100 parties en poids de la résine de la série des polyesters (A) et
un deuxième produit moulé en résine qui est capable d'absorption laser et est lié au premier produit moulé en résine par soudage laser.

10. Produit moulé composite selon la revendication 9, où le premier produit moulé en résine a un domaine ayant une épaisseur de 0,1 à 2 mm, et le deuxième produit moulé en résine est lié au domaine du premier produit moulé en résine.

11. Procédé de soudage laser d'un premier produit moulé en résine et d'un second produit moulé en résine qui est capable d'absorption laser,
qui comprend la mise en contact du premier produit moulé en résine avec le deuxième produit moulé en résine et la projection d'un faisceau laser dans une direction du premier produit moulé en résine vers le deuxième produit moulé en résine, où le premier produit moulé en résine comprend une composition de résine ignifuge comprenant (A) une résine de la série des polyesters et (B) au moins un composé d'acide phosphinique choisi dans le groupe consistant en un sel métallique d'un acide dialkylphosphinique, un sel métallique d'un acide alcanebisphosphinique, où la proportion du composé d'acide phosphinique (B) est 10 à 50 parties en poids par rapport à 100 parties en poids de la résine de la série des polyesters (A) et le premier produit moulé en résine a un facteur de transmission de la lumière laser de pas moins de 15 % à une épaisseur de 2 mm.

12. Procédé selon la revendication 11, où le premier produit moulé en résine peut être coloré avec un agent colorant incapable d'absorption laser, le deuxième produit moulé en résine comprend une composition de résine thermoplastique contenant un absorbant laser ou un agent colorant, une surface du premier produit moulé en résine et une surface du deuxième produit moulé sont mises en contact l'une avec l'autre, et les deux produits moulés en résine sont liés par une irradiation par faisceau laser.

13. Procédé selon la revendication 11, où le premier produit moulé en résine a un domaine à transmission laser ayant une épaisseur de 0,1 à 2 mm et un facteur de transmission de la lumière laser de pas moins de 15 %, une surface du deuxième produit moulé en résine est mise en contact avec au moins le domaine à transmission laser du premier produit moulé en résine, et l'irradiation laser est conduite pour lier les produits moulés.

14. Procédé selon la revendication 11, où le premier produit moulé en résine comprend une composition de résine contenant les composants (A) et (B) suivants ou les composants (A), (B) et (C) suivants:
(A) une résine de la série du poly(butylène téréphtalate),
(B) au moins un composé d'acide phosphinique choisi dans le groupe consistant en un sel métallique d'un acide dialkylphosphinique représenté par la formule (1) suivante et un sel métallique d'un acide alcanebisphosphinique représenté par la formule (2) suivante: 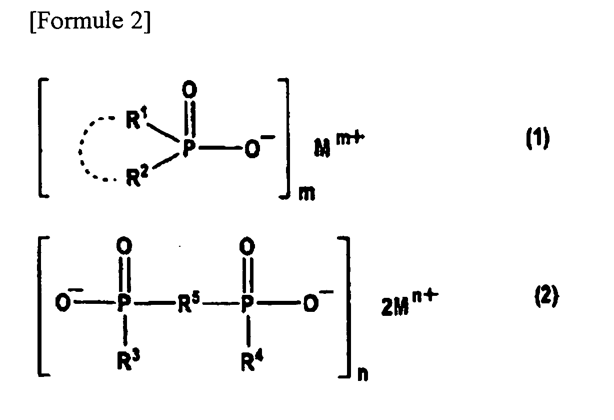 où R¹, R², R³ et R⁴ sont identiques ou différents et représentent chacun un groupe alkyle, R⁵ représente un groupe alkylène, M^{m+} représente un métal ayant m valences, et « m » désigne un entier de 2 à 4 ; Mⁿ⁺ représente un métal ayant n valences, et « n » désigne un entier de 2 à 4.
(C) une résine contenant du fluor,
où la proportion du composé d'acide phosphinique (B) est 10 à 50 parties en poids par rapport à 100 parties en poids de la résine de la série des polyesters (A).
